# EUROPEAN PATENT APPLICATION

(11) **EP 1 911 566 A1**
(43) Date of publication of application: **16.04.2008**
(21) Application number: 06780966.5
(22) Date of filing: 11.07.2006
(51) Int. Cl.: B29C 63/04, B29C 51/10, B29C 51/16, B29C 65/48, B29L 31/30

(54) **PROCESS FOR PRODUCTION OF MOLDINGS AND MOTOR VEHICLES**

(30) Priority: 25.07.2005 JP 2005213719
(71) Applicant: Yamaha Hatsudoki Kabushiki Kaisha, Iwata-shi, Shizuoka 438-8501 (JP)
(72) Inventor: SUZUKI, Yasuo, c/o YAMAHA HATSUDOKI K.K., Iwata-shi, Shizuoka 438-8501 (JP); MOROZUMI, Naohiro, c/o YAMAHA HATSUDOKI K.K., Iwata-shi, Shizuoka 438-8501 (JP)
(74) Representative: Grünecker, Kinkeldey, Stockmair & Schwanhäusser Anwaltssozietät
(86) International application number: PCT/JP2006/313745
(87) International publication number: WO 2007/013292

(57) **Abstract**

A method of making a decorated formed product effectively using a decorative sheet without diminishing the beauty of its appearance is provided.

A decorated formed product making method according to the present invention includes the steps of: (A) providing a formed product body; (B) mounting a first sheet, including an adhesive layer, on the formed product body; (C) heating a second sheet including a decoration layer and a base member that supports the decoration layer thereon; and (D) putting that heated second sheet on the first sheet, thereby bonding the second sheet onto the formed product body.

## Description

### TECHNICAL FIELD

The present invention relates to a method of making a decorated formed product with a decorated surface and more particularly relates to a method of making a formed product that can be used effectively as an exterior or interior member for a motor vehicle.

### BACKGROUND ART

Recently, it was proposed that a decorative sheet be attached to the surface of a formed product as a technique of decorating various types of formed products. A formed product with a decorative sheet can be recycled more easily than a formed product with a painted surface. In addition, a decorated product can have a different type of fine appearance from that of a painted product. That is why a decorative sheet contributes to improving the appearance of formed products noticeably.

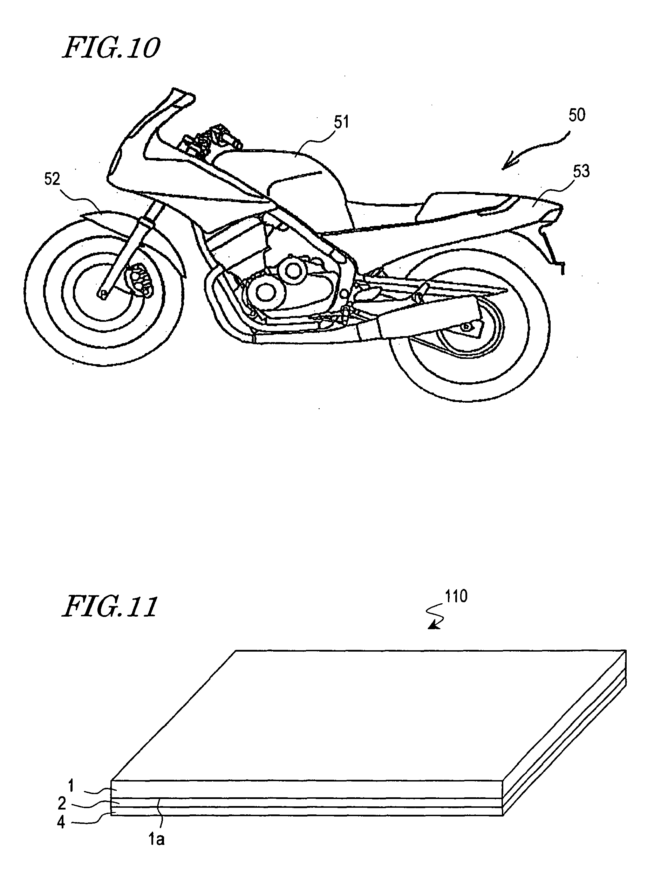

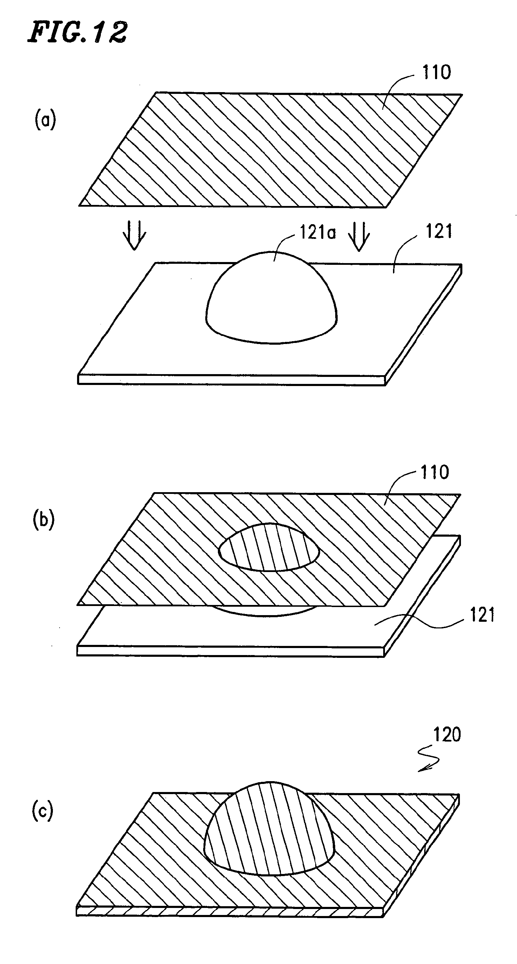

FIG. **11** shows an example of a decorative sheet. The decorative sheet **110** shown in FIG. **11** includes a base member **1** of a resin material, a decoration layer **2** arranged on the principal surface 1a of the base member **1,** and an adhesive layer **4** provided on the decoration layer **2.** The decoration layer **2** may be formed by a printing process, for example. The adhesive layer may be formed by dry-laminating a resin adhesive, for instance. By attaching this decorative sheet **110** to the surface of the body **121** of a formed product in the order shown in FIGS. **12(a), 12(b)** and **12(c)****,** a decorated formed product **120** with a decorated surface can be obtained.

The formed product body **121** shown in FIG. **12(a)** includes a hemispherical (cuplike) raised portion **121a** and therefore has a rugged surface. For that reason, the decorative sheet **110** being attached is stretched so as to follow such ruggedness perfectly. To stretch the decorative sheet 110 effectively, the decorative sheet 110 is typically heated and softened before being attached. A vacuum forming system for making a decorated formed product **120** such as that shown in FIG. **12(c)** by using the decorative sheet **110** is disclosed in Patent Document No. 1, for example.
**Patent Document No. 1:** Japanese Patent Application Laid-Open Publication No. 2002-79573

### DISCLOSURE OF INVENTION

### PROBLEMS TO BE SOLVED BY THE INVENTION

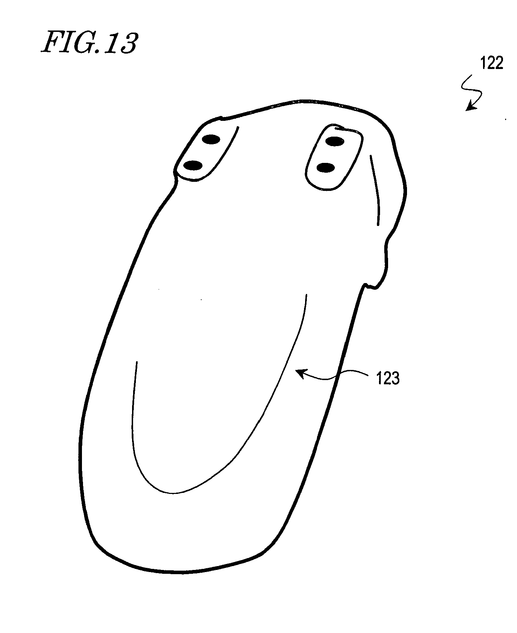

If a decorative sheet is attached to a formed product with a rugged surface, however, the resultant decorated formed product may have an uneven gloss on the surface, thus possibly diminishing the beauty of its appearance. FIG. **13** shows a motorcycle fender **122** decorated with the decorative sheet **110.** As shown in FIG. **13****,** a string of uneven gloss **123** appears on a part of the surface of the fender **122** to ruin the beautiful appearance thereof.

In order to overcome the problems described above, the present invention has an object of providing a method of making a decorated formed product effectively without diminishing the beauty of its appearance even when a decorative sheet is used.

### MEANS FOR SOLVING THE PROBLEMS

A formed product making method according to the present invention is a method of making a decorated formed product with a decorated surface. The method includes the steps of: (A) providing a formed product body; (B) mounting a first sheet, including an adhesive layer, on the formed product body; (C) heating a second sheet including a decoration layer and a base member that supports the decoration layer thereon; and (D) putting that heated second sheet on the first sheet, thereby bonding the second sheet onto the formed product body. In this manner, the object described above is achieved.

In a preferred embodiment, the first sheet further includes a supporting layer that supports the adhesive layer, and the formed product making method of the present invention further includes the step (E) of removing the supporting layer from the adhesive layer before the step (D) is performed.

In a preferred embodiment, the formed product making method of the present invention further includes the step (F) of heating the first sheet before the step (B) is performed.

In a preferred embodiment, the step (D) includes the steps of: (D1) bringing the heated second sheet closer to the formed product body; and (D2) creating a lower pressure in a first space, which is defined between the second sheet that is now located near the formed product body and the formed product body itself, than in a second space, which is defined on the opposite side of the second sheet over or under the first space.

In a preferred embodiment, the step (D) includes forming the second sheet such that the second sheet covers the surface of the formed product body tightly.

In a preferred embodiment, the melting point of the adhesive layer is lower than the glass transition temperature of the base member by at least 30 °C.

In a preferred embodiment, the adhesive layer is made of a material that has an elasticity falling within the range of 1 × 10³ Pa to 1 × 10⁶ Pa at 80 °C and within the range of 1 × 10¹ Pa to 1 × 10⁵ Pa at 180 °C .

In a preferred embodiment, the base member is made of a thermoplastic resin.

In a preferred embodiment, the formed product body has been formed by a deep-drawing process and has such a shape that a draw diameter L and a draw depth D satisfy L ≧ 100 mm and D/L ≧ 1/3.

A motor vehicle according to the present invention includes a formed product formed by one of the methods described above.

### EFFECTS OF THE INVENTION

In a method of making a formed product according to the present invention, a first sheet including an adhesive layer is mounted on a formed product body first, and then a second sheet including a decoration layer is put on the first sheet, thereby adhering the second sheet and the formed product body together. That is why the adhesive is rarely distributed unevenly and a string of uneven gloss can be virtually eliminated. Consequently, according to the present invention, a formed product decorated with a decorative sheet can be made effectively without diminishing the beauty of its appearance.

### BRIEF DESCRIPTION OF DRAWINGS

FIG. **1** schematically illustrates a vacuum forming system for use in a method of making a decorated formed product according to the present invention.
FIGS. **2(a)** and **2(b)** are cross-sectional views schematically illustrating processing steps of a decorated formed product manufacturing process.
FIGS. **3(a)** and **3(b)** are cross-sectional views schematically illustrating processing steps of the decorated formed product manufacturing process.
FIGS. **4(a)** and **4(b)** are cross-sectional views schematically illustrating processing steps of the decorated formed product manufacturing process.
FIGS. **5(a)** and **5(b)** are cross-sectional views schematically illustrating processing steps of the decorated formed product manufacturing process.
FIGS. **6(a)** and **6(b)** are cross-sectional views schematically illustrating processing steps of the decorated formed product manufacturing process.
FIGS. **7(a)** and **7(b)** are cross-sectional views schematically illustrating processing steps of the decorated formed product manufacturing process.
FIG. **8** is a perspective view illustrating an exemplary decorative sheet for use in a method of making a decorated formed product according to the present invention.
FIG. **9(a)** is a perspective view illustrating an example of a decorated formed product formed by the decorated formed product manufacturing process of the present invention and
FIG. **9(b)** is a cross-sectional view of the product as viewed on the plane **9B-9B'** shown in FIG. **9(a)****.**
FIG. **10** is a side view schematically illustrating a motorcycle.
FIG. **11** is a perspective view schematically illustrating a decorative sheet for use in a conventional method of making a decorated formed product.
FIGS. **12(a)** through **12(c)** illustrate a conventional decorated formed product manufacturing process.
FIG. **13** is a perspective view illustrating a motorcycle fender made by the conventional decorated formed product manufacturing process.
FIGS. **14(a)** through **14(c)** illustrate another conventional decorated formed product manufacturing process.

### DESCRIPTION OF REFERENCE NUMERALS

- **1**: base member
- **1a**: principal surface of base member
- **2**: decoration layer
- **2a**: ink layer
- **2b**: metal layer
- **10**: decorative sheet
- **20**: decorated formed product
- **21**: formed product body
- **22**: motorcycle fender
- **30**: gripping frame
- **31**: supporting stage
- **31a**: opening
- **33**: heater
- **34**: vacuum vessel
- **34a**: main vessel
- **34b**: sub-vessel
- **35, 36**: space
- **40**: adhesive sheet
- **41**: adhesive layer
- **42**: supporting layer
- **50**: motorcycle
- **51**: tank housing
- **52**: front fender
- **53**: tail cowl
- **100**: vacuum forming system

### BEST MODE FOR CARRYING OUT THE INVENTION

Hereinafter, preferred embodiments of the present invention will be described with reference to the accompanying drawings. It should be noted, however, that the present invention is in no way limited to the following specific preferred embodiments.

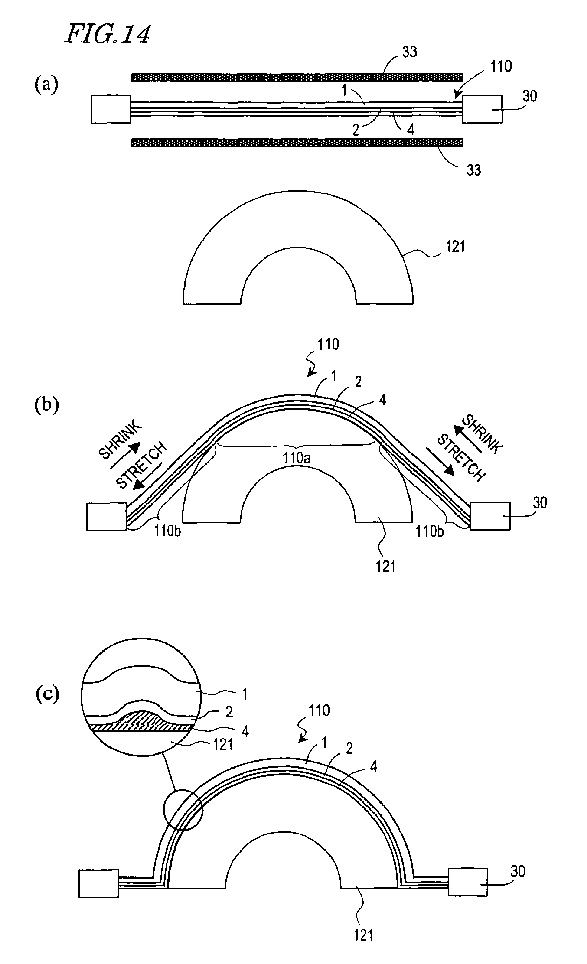

First of all, it will be described why the uneven gloss is produced by the conventional method. FIGS. **14(a)** through **14(c)** illustrate a conventional decorated formed product manufacturing process.

According to the conventional method, first, as shown in FIG. **14(a)****,** a decorative sheet **110** is fixed onto a gripping frame **30** and then heated with a heater **33.** In this process step, the decorative sheet **110** is heated to a temperature at which the base member **1** softens sufficiently and the adhesive layer **4** has good adhesiveness.

Next, as shown in FIG. **14(b)****,** the gripping frame **30** is brought down to press the decorative sheet **110** against a formed product body **121.** In this process step, first, a portion **110a** of the decorative sheet **110** is attached to the formed product body **121** as shown in FIG. **14(b)****.**

Subsequently, the decorative sheet **110** is pressurized by introducing compressed air into the space over the decorative sheet **110.** As a result, the other portion **110b** of the decorative sheet **110** is also bonded onto the formed product body **121,** which is now covered entirely with the decorative sheet **110** as shown in FIG. **14(c)****.** After that, excessive portions of the decorative sheet **110** are cut off to complete a decorated formed product.

In this series of process steps, the portion 110a of the decorative sheet **110** that contacts with the formed product body **121** earlier is cooled more quickly due to conduction of heat into the formed product body **121** than the other portion **110b** that contacts with the formed product body **121** later. For example, if a decorative sheet **110** that has been heated to a temperature of 180 °C to 190 °C is attached, the portion 110b that is still out of contact with the formed product body 121 has a temperature of 150 °C to 170 °C, but the temperature of that portion **110a** in contact with the formed product body 121 decreases to somewhere between 60 °C and 120 °C, in the process step shown in FIG. **14(b)****.** That is why the flowability of the adhesive is lower in the portion **110a** in contact with the formed product body 121 than in the non-contacting portion **110b.**

Also, in this series of process steps, the base member **1** of the decorative sheet **110** is once stretched so as to fit the surface shape of the formed product body **121** closely and then is cooled and shrinks. FIG. **14(b)** shows the direction in which the base member **1** is stretched and the direction in which the base member **1** shrinks. As the base member **1** shrinks, the adhesive in the adhesive layer **4** on the base member **1** flows in the direction in which the base member **1** shrinks. The shifted adhesive stays in the vicinity of the boundary between a region where the adhesive has high flowability (i.e., the portion **110b** that will contact with the formed product body **121** later) and a region where the adhesive has low flowability (i.e., the portion **110a** that has already contacted with the formed product body **121).** As a result, as shown in the enlarged circle in FIG. **14(c)****,** the adhesive layer **4** gets raised around that boundary. Consequently, the decoration layer 2 and the base member **1** located over the adhesive layer **4** also get raised just like the adhesive layer **4,** thus making a string of uneven gloss sensible.

As described above, according to the conventional method, the uneven distribution of the adhesive will produce the uneven gloss and diminish the beauty of its appearance. On the other hand, in a method of making a decorated formed product according to the present invention, such a diminution in the beauty of appearance is minimized by using a first sheet including an adhesive layer (an "adhesive sheet") and a second sheet including a decoration layer (a "decorative sheet").

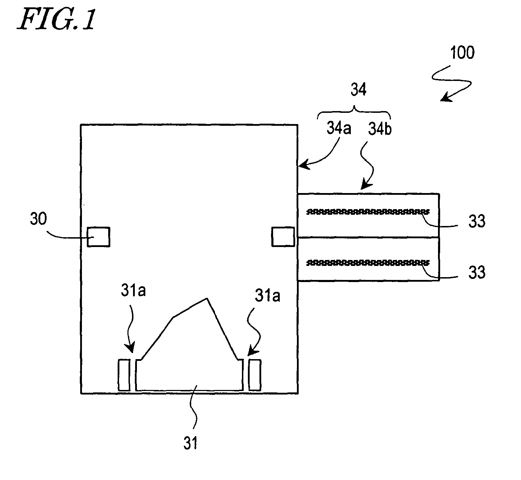

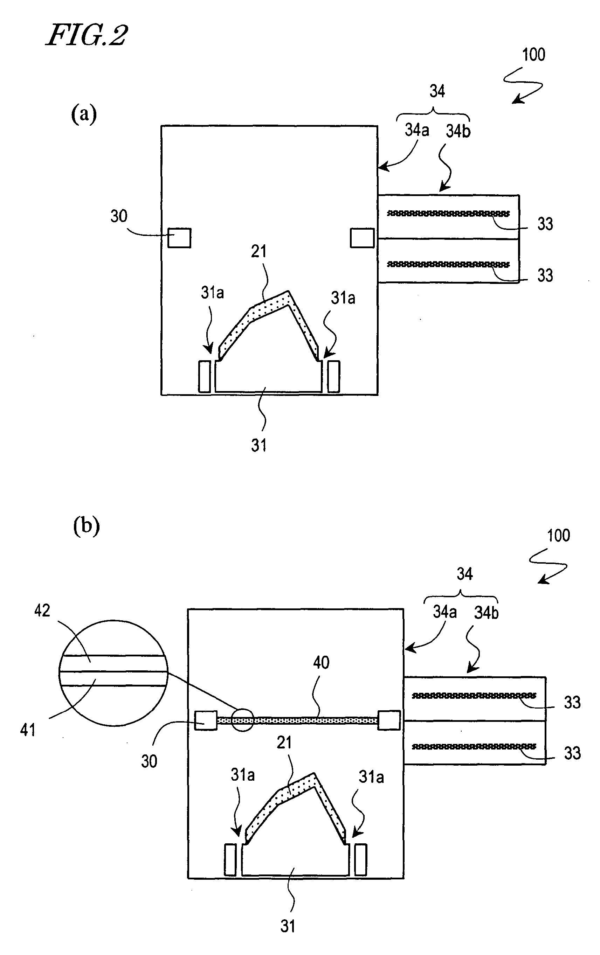

Hereinafter, a manufacturing process according to a preferred embodiment of the present invention will be described with reference to FIGS. **1** through **7****.** FIG. **1** schematically illustrates a vacuum forming system **100** for use to make a decorated formed product. FIGS. **2** through **7** are cross-sectional views schematically illustrating respective processing steps of the manufacturing process.

The vacuum forming system **100** shown in FIG. **1** includes a gripping frame **30** to grip an adhesive sheet or a decorative sheet thereon, a supporting stage **31** for supporting a formed product body thereon, a heater (such as a far-infrared heater) **33** for heating the adhesive sheet and the decorative sheet, and a vacuum vessel **34** that stores all of these members.

The vacuum vessel **34** consists of a main vessel **34a** that stores the gripping frame **30** and the supporting stage **31,** and a sub-vessel **34b** that stores the heater **33.** When the adhesive sheet or the decorative sheet is heated, the heater **33** is introduced into the main vessel **34a.**

The supporting stage **31** has a plurality of openings **31a,** through which the air inside the main vessel **34a** can be exhausted. Although not shown in FIG. **1****,** a mechanism for introducing a gas from outside of this system into the main vessel **34a** (e.g., a hose connected to an external pump) is also provided for the main vessel **34a.**

Using this vacuum forming system **100,** a decorated formed product may be made in the following manner, for example.

First, as shown in FIG. **2(a)****,** a formed product body **21** is provided and mounted on the supporting stage **31.** The formed product body **21** may be made of a resin material, a metallic material or any other suitable material by a known technique. For example, the formed product body 21 may be made of a resin material by an injection molding process.

Next, as shown in FIG. **2(b)****,** an adhesive sheet **40** is provided and fixed onto a gripping frame **30,** which is arranged over the formed product body **21.** As partially enlarged in FIG. **2(b)****,** the adhesive sheet **40** of this preferred embodiment includes an adhesive layer **41** and a supporting layer **42** that supports the adhesive layer **41** thereon. The adhesive layer **41** is made of a material that adheres well to the formed product body **21** (such as a resin adhesive). Meanwhile, the supporting layer **42** will be removed from the adhesive layer **41** later, and therefore, should be made of a material that can be easily peeled off the material of the adhesive layer **41.**

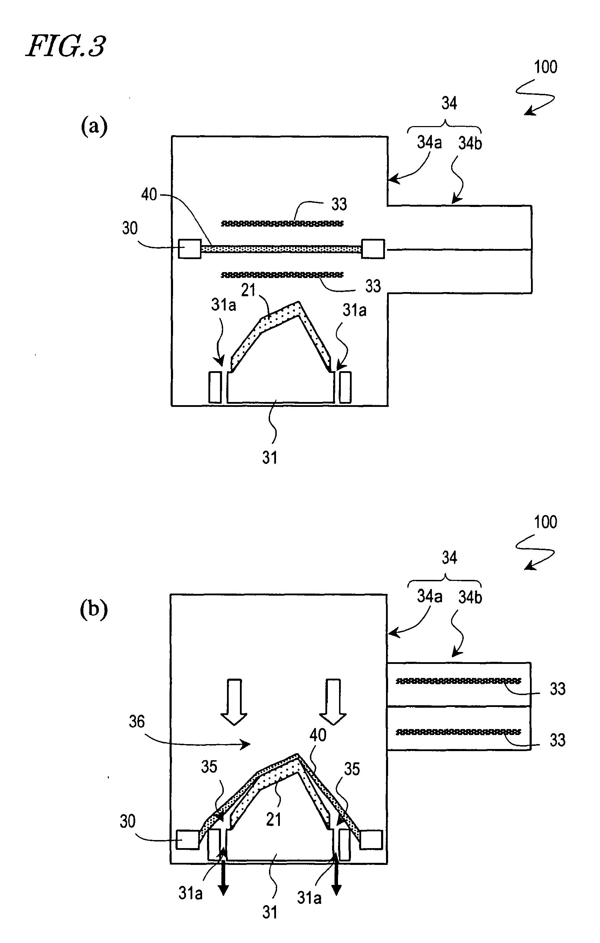

Subsequently, as shown in FIG. **3(a)****,** the adhesive sheet **40** is heated with a heater **33.** In this process step, the adhesive sheet **40** is preferably heated to a temperature that is 20 to 30°C higher than the lowest adhesion temperature of the adhesive layer **41** to ensure good adhesiveness for the adhesive layer **41.**

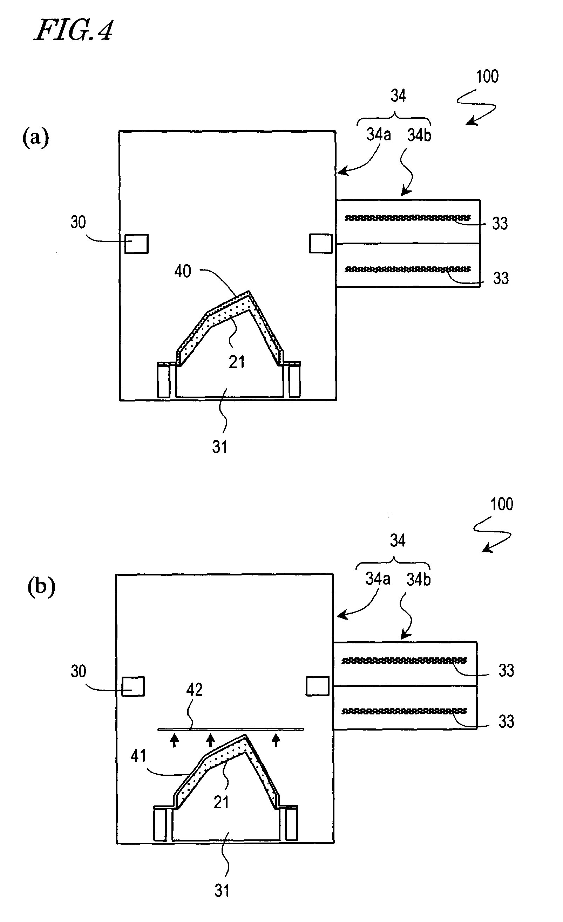

Thereafter, as shown in FIG. **3(b)****,** the adhesive sheet **40** is brought down toward the formed product body **21** and then the pressure in the space **35** between the adhesive sheet **40** and the formed product body **21** is reduced, thereby bonding the adhesive sheet **40** onto the formed product body **21** as shown in FIG. **4(a)****.** If the pressure in the space **35** between the adhesive sheet **40** and the formed product body **21** is reduced, then the adhesive sheet **40** will be pressed against the formed product body **21** with uniform pressure. As a result, the sheet **40** can be bonded to the body **21** effectively. In this preferred embodiment, the space **36** over the adhesive sheet **40** is also pressurized, thereby making an even bigger pressure difference. Consequently, the adhesive sheet **40** can be bonded even more quickly. The pressure in the space **35** may be reduced by exhausting the air in the space **35** through the openings **31a** of the supporting stage **31** using a vacuum pump, for example. On the other hand, the pressure in the space **36** may be increased by supplying compressed air thereto using a compressor, for example.

Subsequently, as shown in FIG. **4(b)****,** the supporting layer **42** of the adhesive sheet **40** is peeled off the adhesive layer **41.** The supporting layer **42** may be removed by getting the edges of the supporting layer **42** peeled off either by a person's hand or a robot.

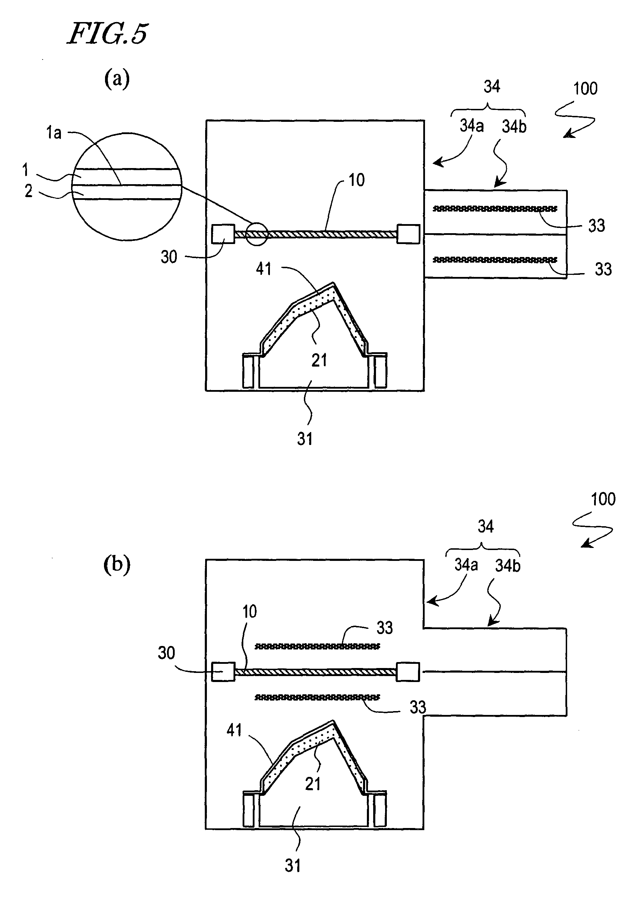

Thereafter, as shown in FIG. **5(a)****,** a decorative sheet **10** is provided and fixed onto the gripping frame **30.** As partially enlarged in FIG. **5(a)****,** the decorative sheet **10** of this preferred embodiment includes a decoration layer **2** and a base member **1** that supports the decoration layer **2** thereon. The decoration layer **2** is arranged on one principal surface 1a (i.e., the principal surface closer to the formed product body **21).** The decoration layer 2 may be formed by printing ink, for example. As shown in FIG. **5(a)****,** no adhesive layer is provided on the surface of the decoration layer **2** that is opposed to the formed product body **21.** Also, the base member **1** of this preferred embodiment is made of a thermoplastic resin.

Subsequently, as shown in FIG. **5(b)****,** the decorative sheet **10** is heated with the heater 33, thereby softening the decorative sheet **10.** In this process step, the decorative sheet **10** is preferably heated to a temperature of (T_{A}-40) °C to (T_{A}+20) °C, where T_{A} is the load deflection temperature of the base member **1.** This range is preferred for the following reasons. Specifically, if the decorative sheet **10** were heated to a temperature lower than (T_{A}-40) °C, then the base member 1 would not be deformed easily and could crack when bonded to the formed product body and formed into a desired shape or could even be non-formable at all. On the other hand, if the decorative sheet **10** were heated to a temperature higher than (T_{A}+20) °C, the sheet being heated could stretch too much to be formed into a desired shape. Typically, the decorative sheet **10** is heated to a temperature that is equal to or higher than the load deflection temperature T_{A} of the base member **1.** The load deflection temperature is measured under a prescribed load (of 0.45 MPa, for example) compliant with the ASTM D648 standard, which is a standard method of measuring a load deflection temperature that was set by the American Society for Testing and Materials. According to this standard, the temperature of a test piece is raised under a prescribed bending load and the temperature at which the deflection of the piece reaches a predetermined value is defined as the load deflection temperature.

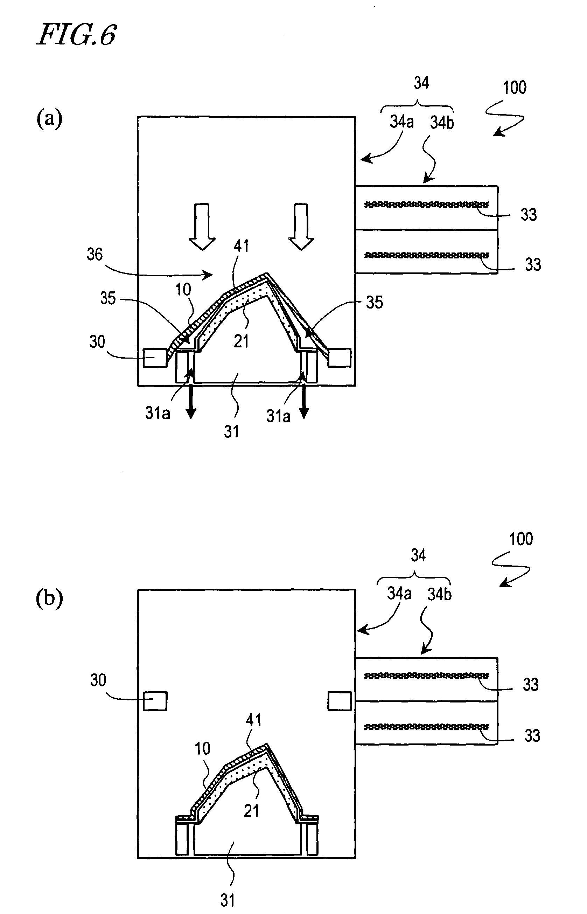

Thereafter, as shown in FIG. **6(a)****,** the decorative sheet **10** is brought down toward the formed product body **21** and then the pressure in the space **35** between the decorative sheet **10** and the formed product body **21** is reduced, while the pressure in the space **36** over the decorative sheet **10** is increased. In this manner, the decorative sheet **10** is bonded onto the formed product body **21** as shown in FIG. **6(b)****.** In this process step, the decorative sheet 10 is stretched and formed so as to fit the surface shape of the formed product body **21** closely. If the decorative sheet **10** were too thin, then the beauty of its appearance would diminish. That is why this process step is preferably carried out such that the thickness of the decorative sheet **10** bonded becomes at least 0.4 times as large as, more preferably 0.5 or more times as large as, the original thickness.

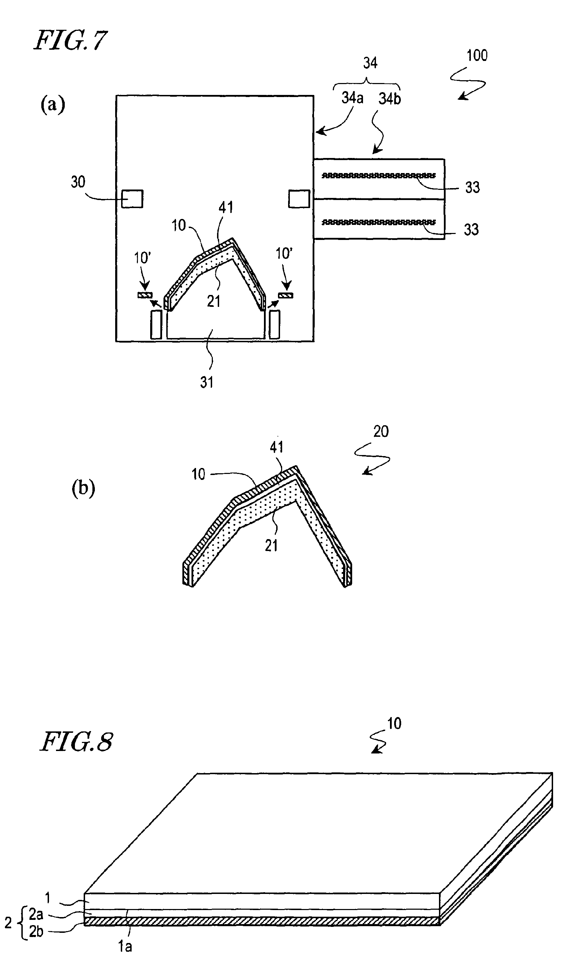

Subsequently, as shown in FIG. **7(a)****,** an excessive portion **10'** of the decorative sheet **10** is trimmed with a rotating blade or any other cutter, and then the formed product body **21** is removed from the supporting stage **30,** thereby completing a formed product **20** with a decorated surface as shown in FIG. **7(b)****.**

In the manufacturing process of the preferred embodiment described above, first, the adhesive sheet **40** is put on the formed product body **21,** and then the decorative sheet **10** heated is put on the adhesive sheet **40,** thereby bonding the formed product body **21** and the decorative sheet 10 together. That is to say, in the process step of attaching the decorative sheet **10,** the adhesive layer **41** is already present on the formed product body **21,** not on the decorative **sheet 10.**

That is why the adhesive in the adhesive layer **41** is not easily affected by the shrinkage of the base member **1** of the decorative sheet **10** and does not get wrinkled easily, either. In addition, when the decorative sheet **10** is attached, not only the temperature but also the flowability of the adhesive are almost uniform all over the adhesive layer **41.** That is why the adhesive is not easily raised locally unlike the adhesive shown in FIG. **14(c)****.** Thus, in the manufacturing process of this preferred embodiment, the adhesive is rarely distributed unevenly, and therefore, the string of uneven gloss can be virtually eliminated and the diminution in the beauty of its appearance can be avoided.

Hereinafter, specific structures and preferred arrangements of the adhesive sheet **40** and the decorative sheet **10** will be described.

The adhesive layer **41** of the adhesive sheet **40** is made of a urethane adhesive of a urethane resin or a urethane acrylate resin or an acrylic adhesive. To satisfy rigidity required for the product in its operating temperature range, the adhesive in the adhesive layer **41** preferably has an elasticity of 1 × 10³ Pa to 1 × 10⁶ Pa at 80 °C . This temperature range is preferred for the following reasons. Specifically, if the elasticity at 80 °C were lower than 1 × 10³ Pa, then the adhesive would soften so much as to cause some problems when the product is used at a high temperature (e.g., used outdoors in summer). On the other hand, if the elasticity at 80 °C were higher than 1 × 10⁶ Pa, then the adhesive would be too hard to resist impact. To overlay the formed product with the adhesive easily to cover its three-dimensional shape perfectly, the adhesive preferably has an elasticity of 1 × 10¹ Pa to 1 × 10⁵ Pa at 180°C. This temperature range is preferred for the following reasons. Specifically, if the elasticity at 180 °C were less than 1 × 10¹ Pa, then the adhesive would flow so easily during the forming process that a pattern representing the adhesive flow could appear on the surface of the formed product. On the other hand, if the elasticity at 180 °C were higher than 1 × 10⁵ Pa, bubbles would be easily produced between the adhesive sheet **40** being bonded and the formed product body 21. The elasticity of the adhesive may be measured by a solid viscosity/elasticity measuring method compliant with JIS K7244-6 (or ISO 6721), for example.

The adhesive layer **41** preferably has a thickness of no less than 30 µm and no more than 100 µm. If the adhesive layer **41** had a thickness of less than 30 *µ*m, then the adhesive layer **41** could become too thin locally (e.g., to 10 µm or less, which is too small a thickness for an adhesive layer) when the adhesive sheet **40** being bonded is stretched. On the other hand, if the adhesive layer **41** had a thickness of greater than 100 µm, then a portion of the adhesive layer **41** that has not been stretched sufficiently would easily create unevenness when the adhesive shrinks. It should be noted that as the adhesive sheet **40** being bonded is stretched, the adhesive layer **41** is also stretched and comes to have a reduced thickness. That is why the thickness of the adhesive layer **41** is preferably increased appropriately according to the surface shape (or the magnitude of the ruggedness) of the formed product body **21.**

The supporting layer **42** that supports the adhesive layer **41** thereon may be made of a resin such as polypropylene or polyethylene terephthalate (PET). As the supporting layer **42,** any of various films that are currently available as release films (which are also called "carrier films") may be used.

To peel the supporting layer **42** off the adhesive layer **41** effectively, the force to peel the supporting layer **42** is preferably 0.02N/25 mm width to 0.10N/ 25 mm width. Also, to stretch the adhesive sheet 40 effectively when the adhesive sheet **40** is being bonded, the supporting layer **42** preferably stretches 300% or more in any of two directions that are parallel to its principal surface and that are perpendicular to each other. Furthermore, the supporting layer **42** is preferably made of a material that does not absorb water easily and that does not gather dust easily. The supporting layer 42 typically has a thickness of 60 µm to 200 *µ*m.

The decoration layer **2** of the decorative sheet **10** is preferably made of ink including a resin material as a binder and a dye dispersed in the resin material. The material of the decoration layer **2** preferably has excellent thermal resistance and bend strength. For example, the ink disclosed in Japanese Patent Application Laid-Open Publication No. 2002-275405 has excellent thermal resistance and bend strength, and therefore, can be used effectively as the material of the decoration layer **2.**

The decoration layer **2** does not have to be a single layer but may include multiple layers. Also, the decoration layer **2** may include not only an ink layer 2a but also a metal layer **2b** as shown in FIG. **8****.** If the decoration layer **2** includes a metal layer **2b,** the decorative sheet **10** can have a metallic color, which gives the product a great-looking metallic appearance, due to the metallic gloss of the metal layer **2b.**

The metal layer **2b** may be made of tin, aluminum, gold, copper, zinc, silver, indium or an alloy thereof. Optionally, the decorative sheet **10** may consist essentially of the metal layer **2b** without the ink layer **2a.** The metal layer 2b may be formed by an evaporation process, for example. Specifically, the metal layer 2b may be formed by evaporating a metal directly on the base member **1** (or on the ink layer **2a).** Alternatively, a metal may be evaporated on a carrier film provided separately and then the stack may be bonded onto the base member 1 (or the ink layer **2a)** to form the metal layer **2b.**

According to the conventional method, if a decorative sheet including a metal layer were used, then the string of uneven gloss would become even more noticeable to diminish the beauty of its appearance significantly. For that reason, the present invention is even more effective in a situation where the decorative sheet **10** includes a metal layer 2b.

The base member **1** of the decorative sheet **10** is preferably made of a thermoplastic resin such as polycarbonate or acrylic resin. The base member **1** should have some degree of rigidity that is high enough to serve as a sheet base member. That is why the material is preferably selected in view of this respect. Also, since the base member **1** will be located on the uppermost surface of the formed product after the decorative sheet **10** is attached to the formed product, the base member **1** preferably has good weather resistance and good damage resistance. For that reason, the other principal surface of the base member **1,** which is opposite to the principal surface 1a with the decoration layer **2,** may be covered with a protective layer with good weather resistance and good damage resistance.

The base member **1** preferably has a thickness of no less than 50 µm and no more than 1,000 *µ*m. This is because if the base member **1** had a thickness of less than 50 *µ*m, the sheet would be difficult to handle or its mechanical strength could be too low to avoid tears when the sheet is being attached. On the other hand, if the thickness of the base member **1** exceeded 1,000 *µ*m, then the sheet could not fit closely the surface of the formed product **21.**

The glass transition temperature of the base member **1** is typically higher than the melting point of the adhesive layer **41.** According to the conventional method shown in FIGS. **14(a)** through **14(c)****,** if there were a big difference between the glass transition temperature of the base member **1** and the melting point of the adhesive layer **4** (i.e., if the melting point of the adhesive layer **4** were much lower than the glass transition temperature of the base member 1), then the adhesive would have so high flowability as to be distributed unevenly and diminish the beauty of its appearance easily when the decorative sheet 110 is heated and softened. In contrast, according to the present invention, even if the melting point of the adhesive layer **4** is much lower than the glass transition temperature of the base member 1 by 30 °C or more, for example, fine appearance without gloss unevenness is realized.

As described above, according to the present invention, the string of uneven gloss can be virtually eliminated and the diminution in the beauty of its appearance can be minimized. For that reason, the present invention can be used effectively to decorate a formed product with significant ruggedness, e.g., to decorate a deep-drawn formed product.

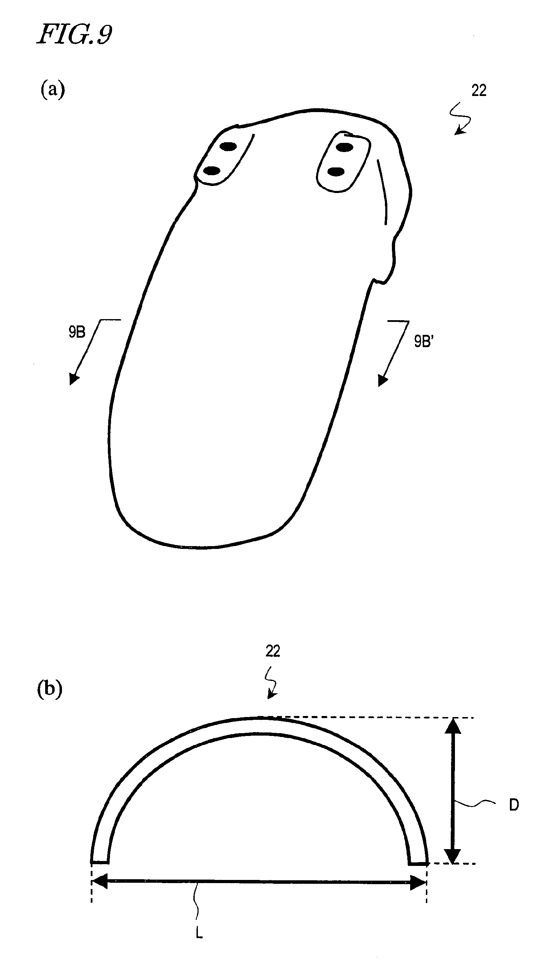

FIG. **9** illustrates an example of a deep-drawn formed product. The motorcycle fender 22 shown in FIG. **9** has a shape with a large D/L ratio (which will be referred to herein as a "draw ratio"), which is the ratio of the draw depth **D** to the draw diameter L (i.e., the width of a cross section of a formed product in the latitudinal direction). That is to say, the fender 22 has a deep-drawn shape. According to the present invention, the diminution in the beauty of appearance due to the uneven distribution of the adhesive can be minimized, and therefore, even a formed product with a relatively large draw diameter L and a rather high draw ratio D/L can also be decorated effectively. For example, according to the conventional method, if a formed product, of which the draw diameter L and draw depth D satisfy L ≧ 100 mm and D/L ≧ 1/3, is decorated, the beauty of its appearance diminishes significantly. However, according to the present invention, even a formed product with such a shape can also be decorated effectively without diminishing the beauty of its appearance.

A formed product made by the manufacturing process of the present invention can be used effectively as an interior or exterior member for a motor vehicle or as an exterior member for a consumer electronic appliance. For example, the formed product can be used effectively as the tank housing **51,** the front fender **52** or the tail cowl **53** of a motorcycle **50** as shown in FIG. **10****.** As used herein, the "motor vehicle" broadly refers to a self-propelled vehicle or machine that is used to transport passengers or goods or to transfer an object. Examples of motor vehicles include passenger cars, motorcycles, buses, trucks, tractors, airplanes, motorboats, and civil engineering vehicles. The motor vehicles include not only vehicles equipped with an internal combustion engine such as a gasoline engine but also those equipped with an electric motor.

Also, in the formed product made by the process of the present invention, the decoration layer 2 is protected by the base member 1 and can maintain fine appearance for a long time. For that reason, the formed product made by the process of the present invention can be used outdoors particularly effectively in ships, outboard engines, water vehicles, all terrain vehicles (ATVs), snowmobiles, two wheelers, and golf cars.

The present inventors actually made a decorated formed product by the manufacturing process of this preferred embodiment and evaluated its appearance. The results of the evaluation will be described below. We also made a decorated formed product by the conventional process and evaluated its appearance, the results of which will also be mentioned for the purpose of comparison.

### Example #1

A cast polypropylene (CPP) carrier film with a thickness of 50 µm was used as a supporting layer and an adhesive layer of a urethane based adhesive UNH790, produced by Nihon Unipolymer Co., Ltd., was deposited to a thickness of 30 µm on this carrier film, thereby obtaining an adhesive sheet.

Meanwhile, a polycarbonate film Eupiron D01, produced by Mitsubishi Gas Chemical Co., Inc. and having a thickness of 0.8 mm, was used as a base member and a pattern was printed on this film with ink to make a decoration layer. In this manner, a decorative sheet was obtained.

Using an adhesive sheet and a decorative sheet thus obtained, a formed product was decorated in a vacuum forming system. Specifically, first, an adhesive sheet was heated and softened and then attached to the formed product body. Next, the supporting layer of the adhesive sheet was peeled off the adhesive layer. And then the decorative sheet was heated, softened and attached to the formed product.

### Example #2

A CPP carrier film with a thickness of 50 µm was used as a supporting layer and an adhesive layer of an adhesive Elfan, produced by Nihon Matai Co., Ltd., was deposited to a thickness of 50 µm on this carrier film, thereby obtaining an adhesive sheet. Meanwhile, a decorative sheet was made as in the first specific example. Then, using these adhesive and decorative sheets, a formed product was decorated within a vacuum forming system as in the first specific example.

### Example #3

A PET carrier film with a thickness of 60 *µm* was used as a supporting layer and an adhesive layer of an adhesive UNH785, produced by Nihon Unipolymer Co., Ltd., was deposited to a thickness of 40 *µ*m on this carrier film, thereby obtaining an adhesive sheet. Meanwhile, a decorative sheet was made as in the first specific example. Then, using these adhesive and decorative sheets, a formed product was decorated within a vacuum forming system as in the first specific example.

### Comparative Example #1

A polycarbonate film Eupiron D01, produced by Mitsubishi Gas Chemical Co., Inc. and having a thickness of 0.8 mm, was used as a base member and a pattern was printed on this film to make a decoration layer. Thereafter, a urethane based adhesive UNH790, produced by Nihon Unipolymer Co., Ltd., was dry-laminated on this decoration layer to form an adhesive layer with a thickness of 30 µm. A decorative sheet obtained in this manner (including an adhesive layer) was heated, softened and then attached to a formed product body within a vacuum forming system.

### Comparative Example #2

A polycarbonate film with a thickness of 0.5 mm was used as a base member and a metal layer of tin was deposited to a thickness of 0.1 µm on this film. The metal layer was formed by evaporating tin on an acrylic resin film with a thickness of 50 µm and then attaching this film onto the base member. Thereafter, a urethane based adhesive UNH385, produced by Nihon Unipolymer Co., Ltd., was dry-laminated on this metal layer to form an adhesive layer with a thickness of 30 µm. A decorative sheet obtained in this manner (including an adhesive layer) was heated, softened and then attached to a formed product body within a vacuum forming system.

### Results of appearance evaluation

The following Table 1 summarizes the results of appearance evaluations that were carried out on Examples #1, #2 and #3 and Comparative Examples #1 and #2:
where ○ indicates that fine appearance with no strings of uneven gloss was realized, Δ indicates that the beauty of its appearance was diminished to a certain degree due to the presence of several strings of uneven gloss, and × indicates that the beauty of its appearance was diminished significantly due to the presence of a lot of strings of uneven gloss.

**Table 1**

| | **Ex. 1** | **Ex. 2** | **Ex. 3** | **Cmp. Ex. 1** | **Cmp. Ex. 2** |
|---|---|---|---|---|---|
| Results of appearance evaluation | ○ | ○ | ○ | Δ | × |

As can be seen from Table 1, no strings of uneven gloss were seen in any of Examples #1, #2 and #3 and fine appearance was realized. In Comparative Example #1, however, several strings of uneven gloss were seen and diminished the beauty of their appearance. Furthermore, in Comparative Example #2 including a metal layer as a decorative sheet, a lot of strings of uneven gloss were seen and diminished the beauty of their appearance significantly. Consequently, it was confirmed that according to the present invention, a decorated formed product could be made effectively with a decorative sheet and without diminishing the beauty of its appearance.

Also, the following Table 2 shows the glass transition temperature T_{g} of the base member, the melting point Tₘ of the adhesive, the difference between these two temperatures, and the elasticity of the adhesive for each of Examples #1, #2 and #3 in which no strings of uneven gloss were seen:

**Table 2**

| Ex | Base member | Adhesive | Glass transition temperature Tg of base member | Melting point Tm of adhesive | Tg-Tm difference | Adhesive elasticity | | Non-uniform gloss |
|---|---|---|---|---|---|---|---|---|
| | | | | | | 80 °C | 180 °C | |
| 1 | Polycarbonate | UHN790 | 145 °C | 105 °C | 40 °C | 8.7× 10⁵ | 1.1× 10² | NO |
| 2 | Polycarbonate | Elfan | 145 °C | 95 °C | 50 °C | 1.0× 10⁶ | 0.9× 10² | NO |
| 3 | Polycarbonate | UHN785 | 145 °C | 100 °C | 45 °C | 7.5× 10⁵ | 1.0× 10² | NO |

As can be seen from Table 2, in each of Examples #1, #2 and #3, the melting point of the adhesive was lower than the glass transition temperature of the base member by 30 °C or more. Also, in any of Examples #1, #2 and #3, the elasticity of the adhesive at 80 °C was in the range of 1 × 10³ Pa to 1 × 10⁶ Pa and the elasticity of the adhesive at 180 °C was in the range of 1 × 10¹ Pa to 1 × 10⁵ Pa.

Thus, it was confirmed that by setting the elasticity of the adhesive within any of these ranges, fine appearance without uneven gloss was realized even when there was a big difference between the glass transition temperature of the base member and the melting point of the adhesive (i.e., in a situation where the adhesive would be distributed unevenly according to the conventional method).

### INDUSTRIAL APPLICABILITY

According to the manufacturing process of the present invention, a decorated formed product can be made effectively with a decorative sheet without diminishing the beauty of its appearance.

The appearance of a formed product made by the manufacturing process of the present invention is so fine that the product can be used effectively as an exterior or interior member for any of various motor vehicles or as an exterior member for any of numerous consumer electronic appliances.

## Claims

1. A method of making a decorated formed product with a decorated surface, the method comprising the steps of:
(A) providing a formed product body;
(B) mounting a first sheet, including an adhesive layer, on the formed product body;
(C) heating a second sheet including a decoration layer and a base member that supports the decoration layer thereon; and
(D) putting that heated second sheet on the first sheet, thereby bonding the second sheet onto the formed product body.

2. The method of claim 1, wherein the first sheet further includes a supporting layer that supports the adhesive layer, and
wherein the method further includes the step (E) of removing the supporting layer from the adhesive layer before the step (D) is performed.

3. The method of claim 1 or 2, further comprising the step (F) of heating the first sheet before the step (B) is performed.

4. The method of one of claims 1 to 3, wherein the step (D) includes the steps of:
(D1) bringing the heated second sheet closer to the formed product body; and
(D2) creating a lower pressure in a first space, which is defined between the second sheet that is now located near the formed product body and the formed product body itself, than in a second space, which is defined on the opposite side of the second sheet over or under the first space.

5. The method of one of claims 1 to 4, wherein the step (D) includes forming the second sheet such that the second sheet covers the surface of the formed product body tightly.

6. The method of one of claims 1 to 5, wherein the melting point of the adhesive layer is lower than the glass transition temperature of the base member by at least 30°C.

7. The method of one of claims 1 to 6, wherein the adhesive layer is made of a material that has an elasticity falling within the range of 1 × 10³ Pa to 1 × 10⁶ Pa at 80°C and within the range of 1 × 10¹ Pa to 1 × 10⁵ Pa at 180 °C.

8. The method of one of claims 1 to 7, wherein the base member is made of a thermoplastic resin.

9. The method of one of claims 1 to 8, wherein the formed product body has been formed by a deep-drawing process and has such a shape that a draw diameter L and a draw depth D satisfy L≧100 mm and D/L≧1/3.

10. A motor vehicle comprising a formed product formed by the method of one of claims 1 to 9.
